(19) Europäisches Patentamt
European Patent Office
Office européen des brevets

(11) EP 0 763 069 B1

(12) EUROPEAN PATENT SPECIFICATION

(45) Date of publication and mention of the grant of the patent:
**18.11.1998 Bulletin 1998/47**

(21) Application number: **95923218.2**

(22) Date of filing: **30.05.1995**

(51) Int Cl.⁶: **C08G 67/02**

(86) International application number:
**PCT/EP95/02075**

(87) International publication number:
**WO 95/32998 (07.12.1995 Gazette 1995/52)**

# (54) PREPARATION OF COPOLYMERS OF CARBON MONOXIDE AND AN ALIPHATIC ALPHA-OLEFIN

HERSTELLUNG VON COPOLYMEREN AUS KOHLENMONOXID UND ALPHA-OLEFINEN

PREPARATION DE COPOLYMERES DE MONOXYDE DE CARBONE ET D'UNE ALPHA-OLEFINE ALIPHATIQUE

(84) Designated Contracting States:
**BE DE FR GB IT NL**

(30) Priority: **31.05.1994 GB 9410884**
**31.05.1994 GB 9410844**

(43) Date of publication of application:
**19.03.1997 Bulletin 1997/12**

(73) Proprietor: **SHELL INTERNATIONALE RESEARCH MAATSCHAPPIJ B.V.**
**2596 HR Den Haag (NL)**

(72) Inventors:
- **BRONCO, Simona**
  **CH-8051 Zurich (CH)**
- **CONSIGLIO, Giambattista**
  **CH-8603 Schwerzenbach (CH)**
- **DI BENEDETTO, Silvia**
  **ETH-Zentrum, 8092 Zürich (CH)**
- **DRENT, Eit**
  **NL-1031 CM Amsterdam (NL)**
- **HEERES, Hero, Jan**
  **NL-1031 CM Amsterdam (NL)**
- **VAN BROEKHOVEN, Johannes, Adrianus, Maria**
  **NL-1031 CM Amsterdam (NL)**
- **REYNHOUT, Marinus, Johannes**
  **NL-1031 CM Amsterdam (NL)**

(56) References cited:
**EP-A- 0 468 594**
**US-A- 5 102 843**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 763 069 B1

## Description

This invention relates to a catalyst composition for the preparation of linear alternating copolymers of carbon monoxide and an aliphatic α-olefin having at least three carbon atoms. The invention further relates to said preparation and to the resulting copolymers and their use. In these copolymers the units originating in carbon monoxide and the units originating in the olefinically unsaturated compound(s) used in the preparation occur in an alternating order. Furthermore, the copolymers are regioregular and stereoregular, in particular isotactic.

The term "regioregular" used herein refers to the way in which the units originating in a monomer $CH_2$=CH-R, R being an aliphatic alkyl group, are bound to units originating in carbon monoxide. Three possibilities are distinguishable, which are termed "head/head", "tail/tail" and "head/tail". They may be represented schematically as follows:

head/head: -($CH_2$)-(CHR)-(CO)-(CHR)-($CH_2$)-
tail/tail: -(CHR)-($CH_2$)-(CO)-($CH_2$)-(CHR)-
head/tail: -($CH_2$)-(CHR)-(CO)-($CH_2$)-(CHR)-

Regioregular copolymers are understood to be copolymers in which the units originating in the monomer $CH_2$=CH-R are bound to the units originating in carbon monoxide predominantly in a head/tail fashion. The degree of regioregularity of such copolymers is expressed as the average regioregularity, which is defined as the percentage of the number of units originating in the monomer $CH_2$=CH-R which are bound to the units originating in carbon monoxide in a head/tail fashion.

The term "stereoregular" used herein refers to the configuration of the chiral carbon atoms present in the regioregular copolymer chains relative to the configuration of the chiral carbon atoms together with which they form part of a diad. A diad in this connection is understood to be a segment of the polymer chain which contains two chiral carbon atoms which are interconnected through a -($CH_2$)-(CO)- bridge. As regards the relation between the configurations of the two chiral carbon atoms of a diad, two possibilities are distinguishable, which are referred to as "isotactic" and "syndiotactic": when the two chiral carbon atoms in a diad have the same configuration this diad is called an isotactic diad, whereas the diad is called syndiotactic when the configurations are opposed. These options can be schematically represented as

isotactic: 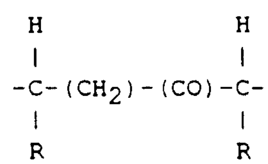

syndiotactic: 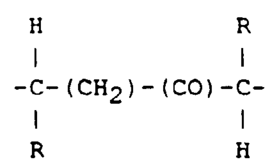

The regioregular copolymers can be divided according to the structure of their chains into three classes:

1) Polymer mixtures in which the number of isotactic diads is substantially equal to the number of syndiotactic diads are referred to as atactic.
2) Polymer mixtures in which the number of isotactic diads is larger than the number of syndiotactic diads are referred to as isotactic.
3) Polymer mixtures in which the number of syndiotactic diads is larger than the number of isotactic diads are referred to as syndiotactic.

The atactic polymer mixtures mentioned under 1) are stereoirregular, whereas the other regioregular polymer mixtures mentioned above possess a degree of stereoregularity. The degree of stereoregularity of the isotactic polymer mixtures is expressed as the average stereoregularity or isotacticity, which is understood to be the percentage of isotactic diads, calculated on the total number of diads present in the polymer chains. On the basis of this definition, the isotactic polymer mixtures have an average stereoregularity of more than 50%.

EP-A-384517 and EP-A-410543 disclose copolymers of carbon monoxide with an aliphatic α-olefin having at least three carbon atoms which are made up of linear chains in which the units originating in carbon monoxide alternate with the units originating in the α-olefin. These copolymers have a certain degree of regio- and stereoregularity, more specifically they are isotactic in nature. For the sake of simplicity the polymer mixtures may be described as isotactic linear alternating copolymers.

EP-A-384517 discloses that the copolymers in question can be prepared by contacting a mixture of the monomers with a catalyst composition comprising a palladium compound and an asymmetric phosphorus bidentate ligand of the general formula $R^1R^2P-R'-PR^3R^4$, wherein R' is a bivalent bridging group containing at least two carbon atoms in the bridge, and $R^1$, $R^2$, $R^3$ and $R^4$ are identical or different optionally polar substituted hydrocarbyl groups, such as the (+)-form and the (-)-form of 4,5-bis(diphenylphosphinomethyl)-2,2-dimethyl-1,3-dioxolane and (-)-4,5-bis (dibutylphosphinomethyl)-2,2-dimethyl-1,3-dioxolane.

In Macromolecules 25, 3604 - 3606 (1992) it is taught that by using as the asymmetric ligand (6,6'-dimethylbiphenyl-2,2'-diyl)bis-(dicyclohexylphosphine) an isotactic linear alternating carbon monoxide/propene copolymer can be prepared which has an isotacticity of about 88%, as calculated from the $^{13}C$-NMR data provided.

EP-A-410543 teaches that when isotactic copolymers are prepared which have a lower degree of isotacticity than required for a certain application, they can be treated to increase their degree of isotacticity, e.g., by extracting the copolymers with a suitable solvent. It is disadvantageous that in this treatment a polymer byproduct is obtained which in many cases has to be discarded because it does not fulfil the requirements as regards tacticity. A further disadvantage is that when the treatment is applied to polymers which are made up of aliphatic α-olefins having, e.g., more than 10 carbon atoms, it becomes increasingly more difficult to carry out the treatment efficiently and with the effect of obtaining a polymer with a high degree of isotacticity. It would therefore be desirable to modify the polymerisation such that copolymers with a high degree of isotacticity can be prepared efficiently, i.e. such that the treatment can be avoided and also that the rate of polymerisation is improved.

It has now surprisingly been found that the polymerisation rate can be improved considerably by using in the catalyst composition an asymmetric phosphorus bidentate ligand of the general formula $R^5R^6P-Q-CHR^9-PR^7R^8$, wherein Q is a 1,2-ferrocenyl bridging group, $R^5$, $R^6$, $R^7$ and $R^8$ are identical or different optionally polar substituted hydrocarbyl groups and $R^9$ is hydrogen or an optionally polar substituted hydrocarbyl group. With a specific substitution pattern of the ferrocenyl containing asymmetric ligand, viz. such that $R^5$ and $R^6$ are identical or different optionally polar substituted aromatic hydrocarbyl groups, $R^7$ and $R^8$ are identical or different cycloaliphatic hydrocarbyl groups, and $R^9$ is an aliphatic hydrocarbyl group, a polymerisation rate can be achieved which even exceeds the rate achieved with 1,3-bis(diethylphosphino)propane when used under otherwise comparable conditions. The latter ligand has been indicated to be excellently suitable for obtaining a high polymerisation rate in the copolymerisation of carbon monoxide and an aliphatic α-olefin, yielding a linear alternating regioregular atactic polymer, cf. EP-A-516238.

It is even more a surprise that the isotacticity of the copolymers which are obtained by using the ferrocenyl containing asymmetric ligand can be higher than achieved previously, even higher than 95%, substantially without loss of the regioregularity, which typically amounts to more than 95%, more typically more than 99%.

Ligands of the general formula $R^5R^6P-Q-CHR^9-PR^7R^8$ as defined hereinbefore are known from EP-A-564406.

The present finding led to the efficient synthesis of isotactic copolymers of carbon monoxide and aliphatic α-olefins, in particular these having more than 10 carbon atoms. Unexpectedly it was subsequently found that the latter copolymers have a better performance than comparable regioregular, atactic copolymers when they are used in paraffinic hydrocarbon oils as additive for improving the low temperature properties of the oil, such as the cold filter plugging point. Such use of comparable atactic copolymers is known from EP-A-468594. The role of the tacticity of a polymeric additive on its effectiveness as paraffinic oil additive, which has now been found, is unprecedented.

Accordingly, the present invention relates to a catalyst composition suitable for the copolymerisation of carbon monoxide with an aliphatic α-olefin, which catalyst composition comprises

a) a palladium compound, and

b) an asymmetric phosphorus bidentate ligand of the general formula $R^5R^6P-Q-CHR^9-PR^7R^8$, wherein Q is a 1,2-ferrocenyl bridging group, $R^5$, $R^6$, $R^7$ and $R^8$ are identical or different optionally polar substituted hydrocarbyl groups and $R^9$ is hydrogen or an optionally polar substituted hydrocarbyl group.

The invention further relates to a process for the preparation of copolymers of carbon monoxide with an aliphatic α-olefin having at least 3 carbon atoms, which process comprises contacting a mixture of the monomers with a catalyst composition of the invention.

The invention further relates to a copolymer of carbon monoxide with an aliphatic α-olefin having more than 10 carbon atoms which copolymer comprises linear chains in which the units originating in the aliphatic α-olefin alternate with units originating in carbon monoxide, and which copolymer is isotactic. The copolymer has preferably an isotacticity of 95% or more.

A further embodiment of this invention relates to a paraffinic hydrocarbon oil composition containing a paraffinic hydrocarbon oil and as an additive a copolymer of carbon monoxide with an aliphatic α-olefin having more than 10 carbon atoms which copolymer comprises linear chains in which the units originating in the aliphatic α-olefin alternate with units originating in carbon monoxide, and which copolymer is isotactic.

The catalyst composition of this invention is based on a palladium compound. The catalyst composition may be based on a precursor compound containing palladium in its zero-valent state. Preferably the palladium compound is a palladium salt, such as a salt of a carboxylic acid. Particularly suitable is palladium acetate.

The phosphorus bidentate ligand of the general formula $R^5R^6P\text{-}Q\text{-}CHR^9\text{-}PR^7R^8$ as defined hereinbefore is asymmetric. Depending of whether $R^9$ is hydrogen or an optionally polar substituted hydrocarbyl group the ligand's structure provides for at least one or at least two elements of chirality. The ligand may be present as an optically inactive mixture of possible stereoisomers or diastereoisomers, or it may be present as an optically active mixture in which there is an excess of a stereoisomer or diastereoisomer, or the ligand consists of one substantially pure stereoisomer or diastereoisomer. The skilled reader will appreciate that it will have no bearing on the isotacticity of the copolymer whether the ligand used consists of one stereoisomer or diastereoisomer or it consists of said stereoisomer or diastereoisomer and its optical antipode.

The group Q of the bidentate ligand is a bivalent 1,2-ferrocenyl group which may contain further substituents attached to the pentadienyl groups, i.e. other than the $R^5R^6P$- and $R^7R^8P\text{-}CHR^9$ groups in a 1,2-position, but this is not preferred.

The hydrocarbyl groups $R^5$ and $R^6$ are preferably optionally polar substituted aromatic hydrocarbyl groups which typically have 6 to 12 carbon atoms. When they are polar substituted, eligible substituents are for example dialkylamino groups, whereas preferred polar substituents are alkoxy groups, such as methoxy groups. Polar substituents are typically positioned ortho with respect to the phosphorus atom. The groups $R^5$ and $R^6$ are preferably identical. They are in particular phenyl groups.

The hydrocarbyl groups $R^7$ and $R^8$ are preferably aliphatic groups or more preferably cycloaliphatic groups, such groups typically contain no more than 10 carbon atoms. Optionally they may be connected to one another through a carbon-carbon bond, so that together with the phosphorus atom to which they are attached they form a heterocyclic phosphorus containing group. The groups $R^7$ and $R^8$ are preferably identical. They may in particular be selected for example from ethyl, 1-propyl, 2-propyl, 1-butyl and 2-butyl groups, more in particular they are cyclohexyl groups.

The group $R^9$ is hydrogen or an optionally polar substituted hydrocarbyl group, typically having no more than 10 carbon atoms. The group $R^9$ is preferably other than hydrogen since this may further increase the isotacticity of the polymer obtained. The group $R^9$ is in particular an alkyl group, more in particular a n-alkyl group, such as an ethyl, 1-propyl or 1-butyl group, most in particular a methyl group.

Very good results can be achieved when as the phosphorus bidentate ligand one of the following is used:

{(R)-1-[(S)-2-(diphenylphosphino)ferrocenyl]}ethyldiphenylphosphine,
{(R)-1-[(S)-2-(dicyclohexylphosphino)ferrocenyl]}ethyldiphenylphosphine,
{(R)-1-[(S)-2-(dicyclohexylphosphino)ferrocenyl]}ethyldicyclohexylphosphine,
[2-(diphenylphosphino)ferrocenyl]methyldicyclohexylphosphine or {1-[2-(diphenylphosphino)ferrocenyl]}ethyldiethylphosphine.

Even further improved results can be obtained by using {(R)-1-[(S)-2-(diphenylphosphino)ferrocenyl]}ethyldicyclohexylphosphine as the phosphorus bidentate ligand.

The quantity of the phosphorus bidentate ligand present in the catalyst composition of this invention may vary between wide limits. Suitably the quantity is in the range of from 0.5-2 mol, in particular from 0.75-1.5 mol per mol of palladium.

The catalyst composition of this invention may comprise as an additional component a component which is generally thought to act as a source of anions which are weakly or non-coordinating with palladium. The anion is preferably an anion of an acid having a pKa of less than 6 (determined in an aqueous solution at 18 °C), suitably less than 4 and in particular less than 2. Examples of suitable acids having a pKa of less than 2 are mineral acids, such as perchloric acid, sulphonic acids, such as p-toluenesulphonic acid and trifluoromethanesulphonic acid, and halogen carboxylic acids, such as trifluoroacetic acid. The source of anions may be incorporated in the catalyst composition in the form of an acid or in the form of a salt. Nickel perchlorate is a very suitable source of anions. The catalyst composition may alternatively comprise as an additional compound an adduct of boric acid with a 1,2-glycol, a catechol or a salicylic acid, a borate such as lithium tetrakis(perfluorophenyl)borate or sodium tetrakis[bis-3,5-(trifluoromethyl)phenyl]borate or a borane such as tris(perfluorophenyl)borane, triphenylborane or tris[bis-3,5-(trifluoromethyl)phenyl]borane. It is also conceivable to use an alumoxane, such as methyl aluminoxane or t-butylaluminoxane, as an additional component. The quantity of these additional components when present in the catalyst composition of this invention may vary between wide limits. Suitably the quantity is in the range of from 0.5-50 equivalents, in particular from 1-25 equivalents

per mol of palladium. However, aluminoxanes may be used in such a quantity that the molar ratio of aluminium to palladium is in the range of 4000:1-10:1, preferably 2000:1-100:1.

In order to increase the rate of polymerisation it is preferred to include in the catalyst composition a quinone, in particular a 1,4-quinone, such as a 1,4-benzoquinone and a 1,4-naphthoquinone. The quantity of quinone suitably lies in the range of from 1-5000 mol, in particular from 5-1000 mol per mol of palladium.

The aliphatic α-olefin used as one of the monomers of the process may be a branched or a straight chain olefin. The aliphatic α-olefin may contain hetero atoms, such as oxygen and nitrogen, which are present when the aliphatic α-olefin is e.g. an olefinically unsaturated ester, alcohol or amide. The aliphatic α-olefin may also contain an aromatic substituent in such a manner that there is no conjugation of the aromatic substituent with the olefinic double bond, such as in 4-phenyl-1-butene. The aliphatic α-olefin is typically a hydrocarbon. The aliphatic α-olefin may be a single olefin but also a mixture of α-olefins may be used, or, if desired, a mixture of an α-olefin with ethene. In the latter case the units in the polymer chains originating in ethene do not contribute to the regio- and stereoregularity of the polymer. In such a case the regularity of the polymer is exclusively related to the parts of the polymer chains which contain units originating in the α-olefin.

When the polymer of this invention is to be used as an additive for a paraffinic hydrocarbon oil, the aliphatic α-olefin contains suitably more than 10 carbon atoms and typically not more than 40 carbon atoms, in particular not more than 30 carbon atoms. Preferably it is a straight chain olefin. It is also possible that in addition to aliphatic α-olefins having more than 10 carbon atoms one or more aliphatic α-olefins having not more than 10 carbon atoms are incorporated. Very suitable is a mixture of aliphatic α-olefins of carbon numbers in the range of from 12 to no more than 24. Very good results have been achieved with a polymer based on 1-hexadecene.

The preparation of the polymers is preferably carried out by contacting the monomers with the catalyst composition of this invention in a diluent in which the polymers are insoluble or virtually insoluble. Lower aliphatic alcohols and in particular methanol are suitable as diluents. Very suitable diluents contain for at least 80 %v an aprotic liquid and for at most 20 %v a protic liquid such as a lower aliphatic alcohol. The aprotic liquid may be a polar liquid, such as acetone, methyl acetate, tetrahydrofuran, dioxane, diethyleneglycol dimethyl ether, gamma-butyrolactone, N-methylpyrrolidone or sulpholane, or an apolar liquid, such as n-hexane, cyclohexane or toluene. Favourable results can be obtained by using a mixture of tetrahydrofuran and methanol. If desired, the polymerisation can also be carried out in the gas phase. The polymer preparation can take place batchwise or continuously.

When the polymerisation is carried out in a diluent which contains a lower aliphatic alcohol the rate of polymerisation may be increased by adding to the polymerisation mixture an ortho ester, such as a trialkyl orthoformate, in particular trimethyl orthoformate. The quantity of the ortho ester may vary between wide limits. Preferably it is used in a quantity of between 100 and 5000 mol, in particular 500 and 3000 mol per mol of palladium.

The quantity of catalyst composition used in the preparation of the polymers may vary within wide limits. Per mol of olefinically unsaturated compound to be polymerised a quantity of catalyst composition is preferably used which contains $10^{-7}$ to $10^{-3}$ and in particular $10^{-6}$ to $10^{-4}$ mol of palladium.

The preparation of the polymers is preferably carried out at a temperature of 20-150 °C and a pressure of 2-150 bar and in particular at a temperature of 30-130 °C and a pressure of 5-100 bar. Suitably a temperature below 80 °C, in particular below 60 °C is selected as this leads to a higher isotacticity of the copolymer. The molar ratio of the olefinically unsaturated compounds relative to carbon monoxide is preferably 10:1 to 1:10 and in particular 5:1 to 1:5. The polymerisation may be carried out in the presence of hydrogen, in which case the hydrogen is suitably present in a quantity of from 0.1-0.5 mol per mol of carbon monoxide.

The copolymers according to this invention may be recovered from the polymerisation mixture by any suitable method. Such methods are well known in the art.

According to the present invention the low-temperature properties of paraffinic hydrocarbon oils, such as the cold filter plugging point and the pour point, can be improved by using as an additive an isotactic linear alternating copolymer of carbon monoxide and an aliphatic α-olefin having more than 10 carbon atoms. The copolymer has preferably an isotacticity of 95% or more. The copolymer may also be used as an aid in extractive dewaxing processes. An example of such a dewaxing process is disclosed in EP-A-482686. Examples of paraffinic hydrocarbon oils include gas oils, diesel oils, lubricating oils and crude oils. Very favourable results can be achieved with paraffinic gas oils.

The molecular weight of the copolymers which are eligible to be used as additive in the paraffinic hydrocarbon oils may vary between wide limits. By preference, copolymers are used having a weight average molecular weight ($\overline{M}_w$) between $10^3$ and $10^6$, in particular between $2x10^3$ and $10^5$. The preference for a given molecular weight and also for a given number of carbon atoms of the aliphatic α-olefin(s) from which the copolymer is prepared is substantially determined by the nature and the quantity of the paraffins present in the paraffinic hydrocarbon oil. The quantity of copolymer which according to the invention is taken up into the paraffinic hydrocarbon oil may vary between wide limits. It is preferred to employ 1-10,000 and in particular 10-1000 mg of copolymer per kg of paraffinic hydrocarbon oil.

In addition to the present copolymers further additives may be added to the paraffinic hydrocarbon oil, such as other polymeric additives than copolymers according to this invention, antioxidants, corrosion inhibitors, metal deactivators and so called wax anti settling agents ("WASA"). Other polymeric additives are, for example, commercially available poly(ethene/vinyl carboxylate)s containing 20-35 %w of the vinyl carboxylate, wherein the vinyl carboxylate is typically vinyl acetate or vinyl propionate. This invention also relates to an additive composition per se comprising a copolymer of carbon monoxide with an aliphatic α-olefin having more than 10 carbon atoms which copolymer comprises linear chains in which the units originating in the aliphatic α-olefin alternate with units originating in carbon monoxide, and which copolymer is isotactic, and a poly(ethene/vinyl carboxylate) containing 20-35 %w of the vinyl carboxylate, wherein the vinyl carboxylate is typically vinyl acetate or vinyl propionate. With respect to their ability to improve the low-temperature properties of the paraffinic hydrocarbon oil the copolymers according to this invention may have a synergistic effect with the further additives mentioned, in particular with poly(ethene/vinyl carboxylate).

The polymer constituents of the other polymeric additives have typically a weight average molecular weight between $10^3$ and $10^6$, in particular between $10^4$ and $10^5$. When other polymeric additives are present in the paraffinic hydrocarbon oil, the copolymer according to this invention constitutes preferably 1-90 %w of the total of polymeric additives.

The invention will now be illustrated with reference to the following examples. The regio- and stereoregularity of the copolymers prepared according to Examples 1-15 was derived from $^{13}C$-NMR spectra (deutero-hexafluoroisopropanol solvent), by analysing the signals in the carbonyl region.

Example 1

A carbon monoxide/propene copolymer was prepared as follows. A stirred autoclave was charged with 150 ml tetrahydrofuran, 39 g (65 ml) propene and a catalyst solution consisting of

1.5 ml tetrahydrofuran,
8.5 ml methanol
0.06 mmol palladium acetate,
0.3 mmol nickel perchlorate,
0.07 mmol {(R)-1-[(S)-2-(diphenylphosphino)ferrocenyl]}ethyldicyclohexylphosphine, and
3.0 mmol 1,4-naphthoquinone.

Air present in the autoclave was replaced by carbon monoxide, which was forced in to achieve a pressure of 80 bar. The contents of the autoclave were brought to a temperature of 42 °C. After 41 hours the polymerisation was terminated by cooling to room temperature and releasing the pressure. The suspension obtained was diluted with methanol. The solids were collected by filtration, washed with methanol and dried.

The yield of copolymer was 47 g. The polymerisation rate calculated from the copolymer yield was 180 g copolymer/(g palladium.hour). The isotacticity of the copolymer obtained was more than 95%. The product showed an optical rotation $[\alpha]_D^{25}$ of 28.4°, as measured in hexafluoroisopropanol at a concentration in the range of 5-10 g/100 ml. The optical rotation is a molar value calculated on the basis of the molecular weight of the copolymer's repeating unit (i.e. 70).

Example 2

A carbon monoxide/propene copolymer was prepared in substantially the same way as in Example 1, but with the following differences:

a) 0.07 mmol of {(R)-1-[(S)-2-(dicyclohexylphosphino)ferrocenyl]}-ethyldiphenylphosphine was used instead of {(R)-1-[(S)-2-(diphenylphosphino)ferrocenyl]}ethyldicyclohexylphosphine, and
b) the reaction time was 114 hours instead of 41 hours.

The yield of copolymer was 20.3 g. The polymerisation rate was 28 g copolymer/(g palladium.hour). The isotacticity of the copolymer obtained was 88%.

Example 3

A carbon monoxide/propene copolymer was prepared in substantially the same way as in Example 1, but with the following differences:

a) 0.07 mmol of {(R)-1-[(S)-2-(dicyclohexylphosphino)ferrocenyl]}-ethyldicyclohexylphosphine was used instead of {(R)-1-[(S)-2-(diphenylphosphino)ferrocenyl]}ethyldicyclohexylphosphine,and
b) the reaction time was 138 hours instead of 41 hours.

The yield of copolymer was 30.8 g. The polymerisation rate was 35 g copolymer/(g palladium.hour). The isotacticity of the copolymer obtained was 90%.

Example 4

A carbon monoxide/propene copolymer was prepared in substantially the same way as in Example 1, but with the following differences:

a) 0.07 mmol of {(R)-1-[(S)-2-(diphenylphosphino)ferrocenyl]}-ethyldiphenylphosphine was used instead of {(R)-1-[(S)-2-(diphenylphosphino)ferrocenyl]}ethyldicyclohexylphosphine, and
b) the reaction time was 116 hours instead of 41 hours.

The yield of copolymer was 27.8 g. The polymerisation rate was 38 g copolymer/(g palladium.hour). The isotacticity of the copolymer obtained was 82%.

Example 5 (for comparison, not according to the invention)

A carbon monoxide/propene copolymer was prepared in substantially the same way as in Example 1, but with the following differences:

a) 110 ml instead of 150 ml tetrahydrofuran and 87 ml instead of 65 ml propene were used,
b) the catalyst solution consisted of

3.9 ml tetrahydrofuran,
1.4 ml methanol
0.091 mmol palladium acetate,
0.65 mmol nickel perchlorate,
0.105 mmol (-)-4,5-bis (dibutylphosphinomethyl)-2,2-dimethyl-1,3-dioxolane and
6.3 mmol 1,4-naphthoquinone,

c) the pressure of carbon monoxide was 45 bar instead of 80 bar,
d) the reaction time was 65.1 hours instead of 41 hours, and
e) the reaction mixture was diluted with water instead of methanol.

The yield of copolymer was 6.83 g. The polymerisation rate was 10.8 g copolymer/(g palladium.hour). The product showed an optical rotation $[\alpha]_D^{25}$ of +10.4°, as measured in hexafluoroisopropanol.

Example 6

A carbon monoxide/propene copolymer was prepared as follows. A stirred autoclave was charged with 75 ml tetrahydrofuran, 20 ml propene, 1 ml trimethyl orthoformate and a catalyst solution consisting of

4.0 ml methanol
0.06 mmol palladium acetate,
0.3 mmol nickel perchlorate,
0.07 mmol {(R)-1-[(S)-2-(diphenylphosphino)ferrocenyl]}ethyldicyclohexylphosphine, and
3.0 mmol 1,4-naphthoquinone.

Air present in the autoclave was replaced by carbon monoxide, which was forced in to achieve a pressure of 80 bar. The contents of the autoclave were brought to a temperature of 46 °C. The pressure was kept constant by supplying carbon monoxide. From the rate of consumption of carbon monoxide it was calculated that the average polymerisation rate during the first hour of the polymerisation amounted to 490 g copolymer/(g palladium.hour). After 10 hours the polymerisation was terminated by cooling to room temperature and releasing the pressure. The suspension obtained was diluted with methanol. The solids were collected by filtration, washed with methanol and dried.

The yield of copolymer was 16 g. The isotacticity of the copolymer obtained was more than 95%. It had a melting point of 185 °C.

Example 7

A carbon monoxide/propene copolymer was prepared in substantially the same way as in Example 6, but with the following differences:

a) 0.07 mmol of racemic {1-[2-(diphenylphosphino)ferrocenyl]}-ethyldiethylphosphine was used instead of {(R)-1-[(S)-2-(diphenylphosphino)ferrocenyl]}ethyldicyclohexylphosphine, and
b) the polymerisation temperature was 49 °C instead of 46 °C.

The average polymerisation rate during the first hour of the polymerisation amounted to 195 g copolymer/(g palladium.hour). The yield of copolymer was 10 g. The isotacticity of the copolymer obtained was estimated at about 70%.

Example 8

A carbon monoxide/propene copolymer was prepared in substantially the same way as in Example 6, but with the following differences:

a) 0.07 mmol of racemic [2-(diphenylphosphino)ferrocenyl]methyldicyclohexylphosphine was used instead of {(R)-1-[(S)-2-(diphenylphosphino)ferrocenyl]}ethyldicyclohexylphosphine, and
b) the polymerisation temperature was 49 °C instead of 46 °C.

The average polymerisation rate during the first hour of the polymerisation amounted to 270 g copolymer/(g palladium.hour). The yield of copolymer was 12 g. The isotacticity of the copolymer obtained was estimated at about 80%.

Example 9 (for comparison, not according to the invention)

A carbon monoxide/propene copolymer was prepared in substantially the same way as in Example 6, but with the difference that 0.07 mmol of 1,3-bis(diethylphosphino)propane was used instead of {(R)-1-[(S)-2-(diphenylphosphino)ferrocenyl]}ethyldicyclohexylphosphine.

The average polymerisation rate during the first hour of the polymerisation amounted to 220 g copolymer/(g palladium.hour). The yield of copolymer was 11 g. The copolymer obtained was regioregular and atactic. It had a melting point of 131 °C.

Example 10

A carbon monoxide/4-methyl-1-pentene copolymer was prepared as follows. A stirred autoclave was charged with 8.4 g 4-methyl-1-pentene and a catalyst solution consisting of

14 ml t-butanol,
1.3 ml methanol,
2.1 ml toluene,
0.1 mmol palladium acetate,
0.3 mmol nickel perchlorate,
0.11 mmol {(R)-1-[(S)-2-(diphenylphosphino)ferrocenyl]}ethyldicyclohexylphosphine, and
1.5 mmol 1,4-naphthoquinone.

Air present in the autoclave was replaced by carbon monoxide, which was forced in to achieve a pressure of 40 bar. The contents of the autoclave were brought to a temperature of 40 °C. After 168 hours the polymerisation was terminated by cooling to room temperature and releasing the pressure. The mixture obtained was stirred in methanol. The solids were collected by filtration, washed with methanol and dried.

The yield of copolymer was 10 g. The isotacticity of the copolymer obtained was more than 95%.

Example 11

A carbon monoxide/1-butene copolymer was prepared using the procedure of Example 10, but with the following differences:

a) 10 g 1-butene was used instead of 4-methyl-1-pentene,

b) carbon monoxide was forced in to achieve a pressure of 43 bar instead of 40 bar, and
c) the time of polymerisation was 21 hours instead of 168 hours.

The yield of copolymer was 9.1 g. The isotacticity of the copolymer obtained was more than 95%.

The $^{13}C$-NMR analyses further revealed that the copolymers prepared in the Examples 1 - 11 had a linear alternating structure.

By comparing the results of Examples 1 - 5 it becomes apparent that by using a ferrocenyl containing bidentate ligand according to this invention a polymerisation rate can be achieved which exceeds by far the polymerisation rate achieved in the known polymerisation using (-)-4,5-bis(dibutylphosphinomethyl)-2,2-dimethyl-1,3-dioxolane as the ligand. Particularly good results are obtained by selecting a ferrocenyl containing ligand of the general formula $R^5R^6P$-Q-$CHR^9$-$PR^7R^8$, wherein Q is a 1,2-ferrocenyl bridging group, $R^5$ and $R^6$ are aromatic hydrocarbyl groups, $R^7$ and $R^8$ are cycloaliphatic hydrocarbyl groups, and $R^9$ is an aliphatic hydrocarbyl group. Copolymers obtained when using a ligand of the latter class can have an isotacticity of more than 95% (cf. also Examples 10 and 11). The optical rotations measured in Examples 1 and 5 are indicative for a substantially higher isotacticity of the copolymer obtained in the former Example.

The results of Examples 6-9 confirm the results obtained in the Examples 1-5 and show that by using a ferrocenyl containing bidentate ligand according to this invention a polymerisation rate can be achieved which exceeds the rate achievable with 1,3-bis(diethylphosphino)propane, which is a ligand according to the prior art which has been indicated to be very suitable for obtaining a high polymerisation rate in the copolymerisation of carbon monoxide with an aliphatic $\alpha$-olefin.

Comparison of Examples 6 and 8 shows that a higher isotacticity of the copolymer product can be obtained by introducing into the ferrocenyl containing bidentate ligand a chiral centre as the second element of chirality.

Example 12

A carbon monoxide/1-hexadecene copolymer was prepared as follows. A stirred autoclave was charged with 300 ml tetrahydrofuran, 300 ml 1-hexadecene and a catalyst solution consisting of

10 ml tetrahydrofuran,
17 ml methanol,
0.09 mmol palladium acetate,
0.45 mmol nickel perchlorate,
0.106 mmol {(R)-1-[(S)-2-(diphenylphosphino)ferrocenyl]}ethyldicyclohexylphosphine, and
4.7 mmol 1,4-naphthoquinone.

Air present in the autoclave was replaced by carbon monoxide, which was forced in to achieve a pressure of 50 bar. The contents of the autoclave were brought to a temperature of 42 °C. After 20 hours the polymerisation was terminated by cooling to room temperature and releasing the pressure. After the addition of methanol to the reaction mixture the copolymer was filtered off, washed with methanol and dried.

The yield of copolymer was 145 g. The polymerisation rate calculated from the copolymer yield was 760 g copolymer/(g palladium.hour). The isotacticity of the copolymer obtained was more than 95%.

Example 13

A carbon monoxide/1-hexadecene copolymer was prepared in substantially the same way as in Example 12, but with the following differences:

a) 90 ml xylene was used instead of 300 ml tetrahydrofuran,
b) 90 ml 1-hexadecene was used instead of 300 ml, and
c) the carbon monoxide partial pressure was 35 bar and in addition hydrogen was used at a partial pressure of 5 bar.

The yield of copolymer was 14 g. The polymerisation rate calculated from the copolymer yield was 73 g copolymer/(g palladium.hour). The isotacticity of the copolymer obtained was more than 95%. The weight average molecular weight of the copolymer was 32,500.

Example 14

A carbon monoxide/1-hexadecene copolymer was prepared in substantially the same way as in Example 12, but

with the following differences:

a) 90 ml xylene was used instead of tetrahydrofuran,
b) 90 ml 1-hexadecene was used instead of 300 ml,
c) no 1,4-naphthoquinone was present in the catalyst solution,
d) the temperature was 60 °C instead of 42 °C, and
e) the carbon monoxide partial pressure was 40 bar and in addition hydrogen was used at a partial pressure of 1 bar.

The yield of copolymer was 29 g. The polymerisation rate calculated from the copolymer yield was 150 g copolymer/(g palladium.hour). The isotacticity of the copolymer obtained was about 80%. The weight average molecular weight of the copolymer was 10,200.

Example 15

A carbon monoxide/l-hexadecene copolymer was prepared in substantially the same way as in Example 12, but with the following differences:

a) 0.10 mmol of 1,3-bis(diethylphosphino)propane was used instead of {(R)-1-[(S)-2-(diphenylphosphino)ferrocenyl]}ethyldicyclohexylphosphine, and
b) the reaction time was 19 hours instead of 21 hours.

The yield of copolymer was 47.4 g. The polymerisation rate calculated from the copolymer yield was 262 g copolymer/(g palladium.hour). The copolymer obtained was atactic.

Example 16

The following polymers, as such or in mixtures, were tested as additives in two gas oils (A and B) in order to lower the cold filter plugging point (CFPP) of the oils, as determined in accordance with Standard Test Method IP 309/83:

Additive 1: the isotactic CO/1-hexadecene copolymer of Example 13;
Additive 2: the isotactic CO/1-hexadecene copolymer of Example 14;
Additive 3: an atactic CO/1-hexadecene copolymer, having $\bar{M}_w$ 45,700;
Additive 4: an atactic CO/1-hexadecene copolymer, having $\bar{M}_w$ 24,600;
Additive 5: an atactic CO/1-hexadecene copolymer, having $\bar{M}_w$ 18,400;
Additive 6: an atactic CO/1-hexadecene copolymer, having $\bar{M}_w$ 15,000;
Additive 7: a commercially available poly(ethene/vinyl acetate)
containing 25 %w vinyl acetate, having $\bar{M}_w$ 75,600, melt index according to ASTM-D1238 350 g/10 min.

Additives 3, 4, 5 and 6 were prepared according to methods disclosed in EP-A-468594; these additives are not according to the invention; they were tested for comparison.

The additives were introduced into the gas oils in the form of 50 %w solution in toluene. The results of the tests are embodied in Table I, where for each of the gas oils the CFPP is reported after addition of the indicated quantity of polymer solution (containing 50 %w of active material), stated as mg of polymer solution per kg gas oil.

Table I

| Additive | $\bar{M}_w$ of CO/olefin copolymer | Added quantity mg/kg gas oil | CFPP °C |
|---|---|---|---|
| Gas oil A | | | |
| - | - | - | -10 |
| 1 | 32,500 | 300 | -16 |
| 2 | 10,200 | 300 | -18 |
| 3 *) | 45,700 | 300 | -14 |
| 4 *) | 24,600 | 300 | -16 |
| 6 *) | 15,000 | 300 | -16 |

*) denotes: for comparison, not according to the invention

Table I (continued)

| Additive | $\overline{M}_w$ of CO/olefin copolymer | Added quantity mg/kg gas oil | CFPP °C |
|---|---|---|---|
| Gas oil A | | | |
| 1 + 7 | 32,500 | 100 + 50 | -18 |
| 2 + 7 | 10,200 | 100 + 50 | -20 |
| 3 + 7 *) | 45,700 | 100 + 50 | -13 |
| 4 + 7 *) | 24,600 | 100 + 50 | -16 |
| 7 *) | - | 150 | -17 |
| Gas oil B | | | |
| - | - | - | -12 |
| 1 + 7 | 32,500 | 25 + 25 | -27 |
| 2 + 7 | 10,200 | 25 + 25 | -23 |
| 5 + 7 *) | 18,400 | 25 + 25 | -17 |
| 7 *) | - | 50 | -14 |

*) denotes: for comparison, not according to the invention

The $^{13}C$-NMR analyses revealed that the copolymers prepared in the Examples 12-15 had a linear alternating structure.

The results of Examples 12 and 15 show again that by using a ferrocenyl containing bidentate ligand according to this invention a polymerisation rate can be achieved which exceeds the rate achievable with 1,3-bis (diethylphosphino)propane.

The results in Table I show that when copolymers according to this invention are used as additive for paraffinic hydrocarbon oils the cold filter plugging points of the oils are decreased. The performance of the copolymers according to the invention is better than the performance of comparable atactic copolymers, which can be deduced from the Table by taking the differences in the weight average molecular weights into account: atactic copolymers with weight average molecular weights of 32,500 and 10,200 would give cold filter plugging points of -15 °C and -17 °C, respectively, where the isotactic copolymers gave -16 °C and -18 °C. In particular by using the isotactic copolymers in conjunction with a poly(ethene/vinyl acetate) very favourable results can be obtained.

## Claims

**1.** A catalyst composition suitable for the copolymerisation of carbon monoxide with an aliphatic α-olefin, which catalyst composition comprises

a) a palladium compound, and
b) an asymmetric phosphorus bidentate ligand of the general formula $R^5R^6P\text{-}Q\text{-}CHR^9\text{-}PR^7R^8$, wherein Q is a 1,2-ferrocenyl bridging group, $R^5$, $R^6$, $R^7$ and $R^8$ are identical or different optionally polar substituted hydrocarbyl groups and $R^9$ is hydrogen or an optionally polar substituted hydrocarbyl group.

**2.** A catalyst composition as claimed in claim 1, characterised in that in the general formula of the phosphorus bidentate ligand $R^5$ and $R^6$ are identical or different optionally polar substituted aromatic hydrocarbyl groups, $R^7$ and $R^8$ are identical or different cycloaliphatic hydrocarbyl groups, and $R^9$ is an aliphatic hydrocarbyl group.

**3.** A catalyst composition as claimed in claim 2, characterised in that in the general formula of the phosphorus bidentate ligand $R^5$ and $R^6$ are phenyl groups, $R^7$ and $R^8$ are cyclohexyl groups, and $R^9$ is a methyl group.

**4.** A catalyst composition as claimed in claim 3, characterised in that the phosphorus bidentate ligand is {(R)-1-[(S)-2-(diphenylphosphino)ferrocenyl]}ethyldicyclohexylphosphine.

**5.** A catalyst composition as claimed in any of claims 1-4, characterised in that it comprises as the palladium compound a palladium carboxylate, such as palladium acetate.

**6.** A catalyst composition as claimed in any of claims 1-5, characterised in that it comprises as an additional component an anion of an acid having a pKa of less than 2, in particular a mineral acid, such as perchloric acid, a sulphonic acid, such as p-toluenesulphonic acid or trifluoromethanesulphonic acid, or a halogen carboxylic acid, such as trifluoroacetic acid, typically in a quantity of 1-25 equivalents per mol palladium.

**7.** A catalyst composition as claimed in any of claims 1-6, characterised in that it comprises the phosphorus bidentate ligand in a quantity in the range of from 0.75-1.5 mol per mol of palladium.

**8.** A process for the preparation of copolymers of carbon monoxide with an aliphatic $\alpha$-olefin having at least 3 carbon atoms, which process comprises contacting a mixture of the monomers with a catalyst composition as claimed in any of claims 1-7.

**9.** A process as claimed in claim 8, characterised in that the polymerisation is carried out by contacting the monomers with the catalyst composition in a diluent containing for at least 80 %v an aprotic liquid and for at most 20 %v a protic liquid such as a lower aliphatic alcohol, and in that it is carried out at a temperature of 30-130 °C, a pressure of 5-100 bar and a molar ratio of the olefinically unsaturated compounds relative to carbon monoxide of 5:1 to 1:5 and using a quantity of catalyst composition which per mol olefinically unsaturated compound to be polymerised contains $10^{-6}$-$10^{-4}$ mol of palladium.

**10.** A copolymer of carbon monoxide with an aliphatic $\alpha$-olefin having more than 10 carbon atoms which copolymer comprises linear chains in which the units originating in the aliphatic $\alpha$-olefin alternate with units originating in carbon monoxide, and which copolymer is isotactic.

**11.** A copolymer as claimed in claim 10, characterised by an isotacticity of 95% or more.

**12.** A copolymer as claimed in claim 10 or 11, characterised in that the $\alpha$-olefin is a straight chain olefin having no more than 30 carbon atoms.

**13.** A copolymer as claimed in any of claims 10-12, characterised in that the copolymers have a weight average molecular weight ($\overline{M}_w$) between $10^3$ and $10^6$, in particular between $2 \times 10^3$ and $10^5$.

**14.** A paraffinic hydrocarbon oil composition containing a paraffinic hydrocarbon oil and as an additive a copolymer as claimed in any of claims 10-13.

**15.** A paraffinic hydrocarbon oil composition as claimed in claim 14, characterised in that it contains the copolymer as claimed in any of claims 10-13 in a quantity of 1-10,000, in particular in a quantity of 10-1,000 mg of copolymer per kg of paraffinic hydrocarbon oil.

**16.** A paraffinic hydrocarbon oil composition as claimed in claim 14 or 15, characterised in that it contains as a further polymeric additive a poly(ethene/vinyl carboxylate) containing 20-35 %w of the vinyl carboxylate, wherein the vinyl carboxylate is vinyl acetate or vinyl propionate.

**17.** A paraffinic hydrocarbon oil composition as claimed in claim 16, characterised in that the copolymer as claimed in any of claims 10-13 constitutes 1-90 %w of the total of polymeric additives.

**18.** An additive composition comprising a copolymer as claimed in any of claims 10-13 and a poly(ethene/vinyl carboxylate) containing 20-35 %w of the vinyl carboxylate, wherein the vinyl carboxylate is typically vinyl acetate or vinyl propionate.

**Patentansprüche**

**1.** Für die Copolymerisation von Kohlenmonoxid mit einem aliphatischen $\alpha$-Olefin geeignete Katalysatorzusammensetzung, die

a) eine Palladiumverbindung und

b) einen asymmetrischen Phosphorbidentatliganden mit der allgemeinen Formel $R^5R^6P$-Q-$CHR^9$-$PR^7R^8$ umfaßt, worin Q eine 1,2-Ferrocenylbrückengruppe darstellt, $R^5$, $R^6$, $R^7$ und $R^8$ gleiche oder verschiedene, gegebenenfalls polar substituierte Hydrocarbylgruppen bedeuten und $R^9$ für Wasserstoff oder eine gegebenenfalls polar substituierte Hydrocarbylgruppe steht.

**2.** Katalysatorzusammensetzung nach Anspruch 1, dadurch gekennzeichnet, daß in der allgmeinen Formel des Phosphorbidentatliganden $R^5$ und $R^6$ gleiche oder verschiedene, gegebenenfalls polar substituierte aromatische Hydrocarbylgruppen bedeuten, $R^7$ und $R^8$ gleiche oder verschiedene cycloaliphatische Hydrocarbylgruppen darstellen und $R^9$ für eine aliphatische Hydrocarbylgruppe steht.

**3.** Katalysatorzusammensetzung nach Anspruch 2, dadurch gekennzeichnet, daß in der allgemeinen Formel des Phosphorbidentatliganden $R^5$ und $R^6$ Phenylgruppen sind, $R^7$ und $R^8$ Cyclohexylgruppen bedeuten und $R^9$ für eine Methylgruppe steht.

**4.** Katalysatorzusammensetzung nach Anspruch 3, dadurch gekennzeichnet, daß der Phosphorbidentatligand {(R)-1-[(S)-2-(Diphenylphosphino)ferrocenyl]}ethyldicyclohexylphosphin ist.

**5.** Katalysatorzusammensetzung nach einem der Ansprüche 1 bis 4, dadurch gekennzeichnet, daß sie als Palladiumverbindung ein Palladiumcarboxylat wie Palladiumacetat enthält.

**6.** Katalysatorzusammensetzung nach einem der Ansprüche 1 bis 5, dadurch gekennzeichnet, daß sie als eine weitere Komponente ein Anion einer Säure mit einem pKa-Wert von kleiner als 2 enthält, insbesondere einer Mineralsäure wie Perchlorsäure, einer Sulfonsäure wie para-Toluolsulfonsäure oder Trifluormethansulfonsäure oder einer Halogencarbonsäure, wie Trifluoressigsäure, typisch in einer Menge von 1 - 25 Äquivalenten je Mol Palladium.

**7.** Katalysatorzusammensetzung nach einem der Ansprüche 1 bis 6, dadurch gekennzeichnet, daß sie den Phosphorbidentatliganden in einer Menge im Bereich von 0,75 bis 1,5 Mol je Mol Palladium enthält.

**8.** Verfahren zur Herstellung von Copolymeren aus Kohlenmonoxid mit einem aliphatischen $\alpha$-Olefin mit wenigstens 3 Kohlenstoffatomen, welches Verfahren ein Inkontaktbringen eines Gemisches der Monomeren mit einer Katalysatorzusammensetzung nach einem der Ansprüche 1 bis 7 umfaßt.

**9.** Verfahren nach Anspruch 8, dadurch gekennzeichnet, daß die Polymerisation durch Inkontaktbringen der Monomeren mit der Katalysatorzusammensetzung in einem Verdünnungsmittel ausgeführt wird, das zu wenigstens 80 Vol.-% eine aprotische Flüssigkeit und zu höchstens 20 Vol.-% eine protische Flüssigkeit wie einen niederen aliphatischen Alkohol enthält, und daß sie bei einer Temperatur von 30 bis 130°C, einem Druck von 5 bis 100 bar und einem Molverhältnis der olefinisch ungesättigten Verbindungen zu Kohlenmonoxid von 5:1 bis 1:5 und unter Verwendung einer Menge an Katalysatorzusammensetzung ausgeführt wird, die je Mol olefinisch ungesättigter, zu polymerisierender Verbindung $10^{-6}$ bis $10^{-4}$ Mol Palladium enthält.

**10.** Copolymer von Kohlenmonoxid mit einem aliphatischen $\alpha$-Olefin mit mehr als 10 Kohlenstoffatomen, welches Copolymer lineare Ketten enthält und worin die vom aliphatischen $\alpha$-Olefin abstammenden Einheiten mit den von Kohlenmonoxid abstammenden Einheiten alternieren, und welches Copolymer isotaktisch ist.

**11.** Copolymer nach Anspruch 10, gekennzeichnet durch eine Isotaktizität von 95 % oder darüber.

**12.** Copolymer nach Anspruch 10 oder 11, dadurch gekennzeichnet, daß das $\alpha$-Olefin ein geradkettiges Olefin mit nicht mehr als 30 Kohlenstoffatomen ist.

**13.** Copolymer nach einem der Ansprüche 10 bis 12, dadurch gekennzeichnet, daß die Copolymere ein gewichtsmittleres Molekulargewicht ($M_w$) zwischen $10^3$ und $10^6$, insbesondere zwischen $2x10^3$ und $10^5$ aufweisen.

**14.** Paraffinische Kohlenwasserstoffölzusammensetzung mit einem Gehalt an einem paraffinischen Kohlenwasserstofföl und an einem Copolymer nach einem der Ansprüche 10 bis 13 als ein Additiv.

**15.** Paraffinische Kohlenwasserstoffölzusammensetzung nach Anspruch 14, dadurch gekennzeichnet, daß sie das Copolymer nach einem der Ansprüche 10 bis 13 in einer Menge von 1 bis 10.000, insbesondere in einer Menge

von 10 bis 1.000 mg Copolymer je kg paraffinischem Kohlenwasserstofföl enthält.

**16.** Paraffinische Kohlenwasserstoffölzusammensetzung nach Anspruch 14 oder 15, dadurch gekennzeichnet, daß sie als ein weiteres polymeres Additiv ein Poly(ethen/vinylcarboxylat) mit einem Gehalt an 20 bis 35 Gew.-% Vinylcarboxylat enthält, wobei das Vinylcarboxylat Vinylacetat oder Vinylpropionat ist.

**17.** Paraffinische Kohlenwasserstoffölzusammensetzung nach Anspruch 16, dadurch gekennzeichnet, daß das Copolymer nach einem der Ansprüche 10 bis 13 1 bis 90 Gew.-% der Gesamtmenge an polymeren Additiven ausmacht.

**18.** Additivzusammensetzung mit einem Gehalt an einem Copolymer nach einem der Ansprüche 10 bis 13 und an einem Poly(ethen/vinylcarboxylat), das 20 bis 35 Gew.-% Vinylcarboxylat enthält, worin das Vinylcarboxylat typischerweise Vinylacetat oder Vinylpropionat ist.

## Revendications

**1.** Composition catalytique convenant à la copolymérisation du monoxyde de carbone avec une α-oléfine aliphatique, laquelle composition catalytique comprend

a) un composé du palladium et
b) un ligand bidentate du phosphore asymétrique répondant à la formule générale $R^5R^6P\text{-}Q\text{-}CHR^9\text{-}PR^7R^8$, dans laquelle Q représente un groupe de pontage du type 1,2-ferrocényle, $R^5$, $R^6$, $R^7$ et $R^8$ sont des radicaux hydrocarbyle, éventuellement substitués polaires, identiques ou différents et $R^9$ représente un atome d'hydrogène ou un radical hydrocarbyle, éventuellement substitué polaire.

**2.** Composition catalytique suivant la revendication 1, caractérisée en ce que, dans la formule générale du ligand bidentate du phosphore, $R^5$ et $R^6$ représentent des radicaux hydrocarbyle aromatiques substitués, éventuellement polaires, identiques ou différents, $R^7$ et $R^8$ représentent des radicaux hydrocarbyle cycloaliphatiques, identiques ou différents et $R^9$ représente un groupe hydrocarbyle aliphatique.

**3.** Composition catalytique suivant la revendication 2, caractérisée en ce que, dans la formule générale du ligand bidentate du phosphore, $R^5$ et $R^6$ représentent des radicaux phényle, $R^7$ et $R^8$ représentent des radicaux cyclohexyle et $R^9$ représente le radical méthyle.

**4.** Composition catalytique suivant la revendication 3, caractérisée en ce que le ligand bidentate du phosphore est la {(R)-1-[(S)-2-(diphénylphosphino)ferrocényl]}éthyldicyclohexylphosphine

**5.** Composition catalytique suivant l'une quelconque des revendications 1 à 4, caractérisée en ce qu'elle comprend, à titre de composé du palladium, un carboxylate de palladium, tel que l'acétate de palladium.

**6.** Composition catalytique suivant l'une quelconque des revendications 1 à 5, caractérisée en ce qu'elle comprend, à titre de composant supplémentaire, un anion d'un acide possédant un pKa inférieur à 2, plus particulièrement, un acide minéral, tel que l'acide perchlorique, un acide sulfonique, tel que l'acide p-toluènesulfonique ou l'acide trifluorométhanesulfonique, ou un acide carboxylique halogéné, tel que l'acide trifluoracétique, typiquement en une proportion de 1 à 25 équivalents par mole de palladium.

**7.** Composition catalytique suivant l'une quelconque des revendications 1 à 6, caractérisée en ce qu'elle comprend le ligand bidentate du phosphore en une proportion qui varie de 0,75 à 1,5 mole par mole de palladium.

**8.** Procédé de préparation de copolymères du monoxyde de carbone avec une α-oléfine aliphatique possédant au moins 3 atomes de carbone, caractérisé en ce que l'on met en contact un mélange des monomères avec une composition catalytique suivant l'une quelconque des revendications 1 à 7.

**9.** Procédé suivant la revendication 8, caractérisé en ce que l'on entreprend la polymérisation par la mise en contact des monomères avec la composition catalytique dans un diluant contenant, pour au moins 80% en volume, un liquide aprotique et pour au plus 20% en volume, un liquide protique, tel qu'un alcool aliphatique inférieur et en ce qu'on l'entreprend à une température de 30 à 130°C, sous une pression de 5 à 100 bars et à un rapport molaire des composés oléfiniquement insaturés au monoxyde de carbone de 5:1 à 1:5 et en utilisant une quantité de

composition catalytique qui, par mole de composé oléfiniquement insaturé à polymériser, contient de $10^{-6}$ à $10^{-4}$ mole de palladium.

**10.** Copolymère du monoxyde de carbone avec une α-oléfine aliphatique possédant plus de 10 atomes de carbone, lequel copolymère comprend des chaînes linéaires dans lesquelles les unités tirant leur origine de l'α-oléfine aliphatique alternent avec des unités tirant leur origine du monoxyde de carbone, lequel copolymère est isotactique.

**11.** Copolymère suivant la revendication 10, caractérisé par une isotacticité de 95% et davantage.

**12.** Copolymère suivant la revendication 10 ou 11, caractérisé en ce que l'α-oléfine est une oléfine à chaîne droite ne possédant pas plus de 30 atomes de carbone.

**13.** Copolymère suivant l'une quelconque des revendications 10 à 12, caractérisé en ce que le copolymère possède un poids moléculaire moyen en poids ( $\overline{M}_p$ ) compris entre $10^3$ et $10^6$, en particulier, entre $2x10^3$ et $10^5$.

**14.** Composition d'huile hydrocarbonée paraffinique contenant une huile hydrocarbonée paraffinique et, à titre d'additif, un copolymère suivant l'une quelconque des revendications 10 à 13.

**15.** Composition d'huile hydrocarbonée paraffinique suivant la revendication 14, caractérisée en ce qu'elle contient le copolymère, tel que revendiqué dans l'une quelconque des revendications 10 à 13, en une quantité de 1 à 10.000, plus particulièrement, en une quantité de 10 à 1.000, mg de copolymère par kg d'huile hydrocarbonée paraffinique.

**16.** Composition d'huile hydrocarbonée paraffinique suivant la revendication 14 ou 15, caractérisée en ce qu'elle contient, à titre d'autre additif polymérique, un poly(éthène/carboxylate de vinyle) contenant 20 à 35% en poids du carboxylate de vinyle, où le carboxylate de vinyle est l'acétate de vinyle ou le propionate de vinyle.

**17.** Composition d'huile hydrocarbonée paraffinique suivant la revendication 16, caractérisée en ce que le copolymère, tel que revendiqué dans l'une quelconque des revendications 10 à 13 constitue de 1 à 90% en poids du total des additifs polymériques.

**18.** Composition d'additif comprenant un polymère suivant l'une quelconque des revendications 10 à 13 et un poly (éthène/carboxylate de vinyle), contenant 20 à 35% en poids du carboxylate de vinyle, où le carboxylate de vinyle est, de manière typique, l'acétate de vinyle ou le propionate de vinyle.